# FASCICULE DE BREVET EUROPEEN

(11) **EP 1 054 801 B1**
(45) Date de publication et mention de la délivrance du brevet: **02.05.2003**
(21) Numéro de dépôt: 99901678.5
(22) Date de dépôt: 01.02.1999
(51) Int. Cl.: B62D 25/20, B60N 3/06, B62D 21/17

(54) **AGENCEMENT DE LA PARTIE INFERIEURE DE L'HABITACLE D'UN VEHICULE AUTOMOBILE**
ANORDNUNG DES UNTERTEILS DES INNENRAUMS EINES KRAFTFAHRZEUGES
ARRANGEMENT FOR MOTOR VEHICLE PASSENGER COMPARTMENT BOTTOM PART

(30) Priorité: 30.01.1998 FR 9801084
(43) Date de publication de la demande: 29.11.2000
(73) Titulaire: Renault s.a.s., 92100 Boulogne Billancourt (FR)
(72) Inventeur: MASSON, Jean-Claude, F-95450 Gouzangrez (FR); MUSSET, Olivier, F-75015 Paris (FR)
(86) Numéro de dépôt international: FR9900203
(87) Numéro de publication internationale: WO99038753

(56) Documents cités:
- DE-U- 29 715 602
- FR-A- 2 744 978
- PATENT ABSTRACTS OF JAPAN vol. 098, no. 002, 30 janvier 1998 (1998-01-30) & JP 09 263167 A (PACIFIC IND CO LTD), 7 octobre 1997 (1997-10-07)

## Description

L'invention concerne un agencement de la partie inférieure de l'habitacle d'un véhicule automobile.

L'invention concerne plus particulièrement l'agencement de la partie inférieure d'un habitacle de véhicule automobile du type comportant un plancher qui reçoit un élément formant un faux plancher, l'élément formant faux plancher est délimité pas an moins une paroi supérieure.

Une telle conception du plancher d'un véhicule automobile comme du brevet FR-A-2 744 978 a pour avantage d'améliorer l'écoulement aérodynamique sous le véhicule dans la mesure où la face inférieure du plancher est sensiblement plane et lisse, et tout au moins sans obstacles transversaux en saillie sous cette face inférieure.

Les traverses pour l'appui et l'accrochage des structures de support de sièges sont aussi généralement réalisées venues de matière avec la tôle de plancher et elles constituent des éléments de rigidification du plancher.

Compte tenu de cette conception de plancher, il existe un volume ou espace libre qui s'étend verticalement entre la face supérieure de la tôle de plancher et le plan d'appui dans lequel s'étendent les faces supérieures des traverses du plancher.

L'invention a pour objet de proposer un nouvel agencement de la partie inférieure de l'habitacle d'un vehicule automobile ayant pour but d'utiliser cet espace disponible

Dans ce but, l'invention propose un agencement caractérisé en ce que le faux plancher est délimité en plus par une paroi inférieure, en contact avec le plancher, qui forme avec ladite paroi supérieure au moins un volume utile et en ce que la surface de la paroi inférieure est en contact direct avec la surface du plancher.

D'autres caractéristiques de l'invention sont définies dans les revendications dépendantes 1 à 12.

Des exemples de réalisations de l'invention apparaîtront à la lecture de la description détaillée qui suit pour la compréhension de laquelle on se reportera aux dessins annexés dans lesquels :
- la figure 1 est une vue schématique en perspective qui représente un élément de faux plancher pour l'agencement, conformément aux enseignements de l'invention, de la partie inférieure de l'habitacle d'un véhicule, ici de la partie située sous les pieds et le siège du conducteur du véhicule ; et
- les figures 2 à 4 sont des vues schématiques en section selon les lignes 2-2 à 4-4 de la figure 1, qui illustrent le faux plancher monté à l'intérieur du véhicule en association avec une partie du plancher et un tapis supérieur d'habillage ; et
- la figure 5 est une vue à plus grande échelle du détail D5 de la figure 4.

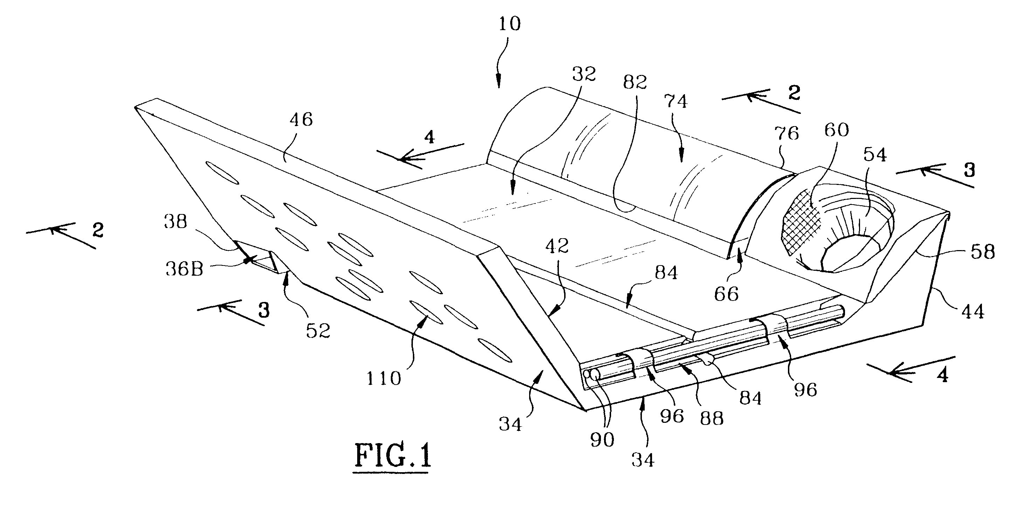

On a représenté à la figure 1 un élément creux 10 formant faux plancher qui est prévu pour aménager la partie inférieure de l'habitacle du véhicule automobile, et ici plus particulièrement le quart longitudinal avant de la partie inférieure située sous les pieds 12 du conducteur et au moins en partie sous son siège 13.

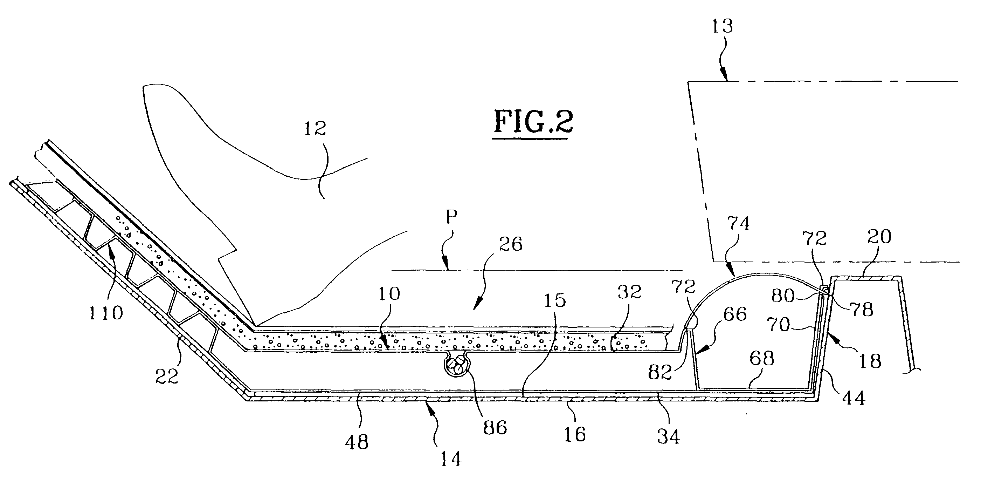

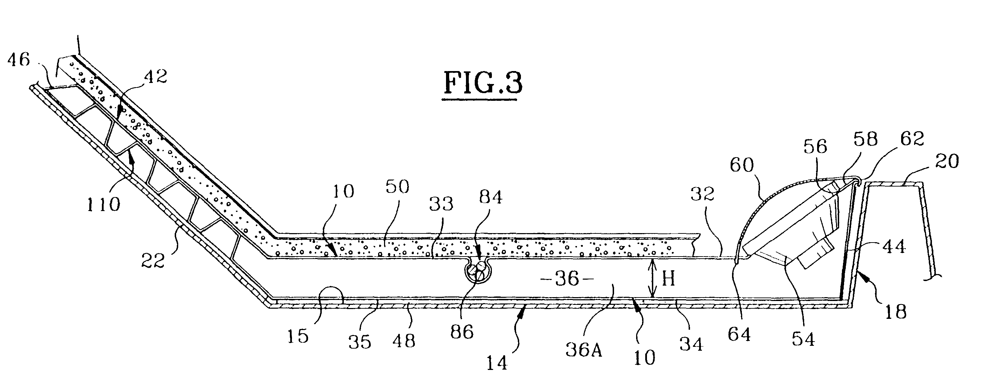

Cette partie inférieure de l'habitacle est délimité par une tôle inférieure 14 appartenant au plancher qui s'étend sensiblement dans un plan horizontal et dont on a représenté, notamment aux figures 2 et 3, une partie plane horizontale 16 délimitée longitudinalement vers l'arrière par une nervure verticale 18 orientée à l'intérieur de l'habitacle formant traverse et dont la face supérieure horizontale plane 20 constitue une surface d'appui et de fixation pour la structure de support (non représentée en détail) du siège 13 dans l'habitacle.

La partie horizontale plane 16 s'étend longitudinalement vers l'avant et elle se prolonge par une partie avant relevée 22 constituant globalement un plan d'appui incliné formant repose-pied.

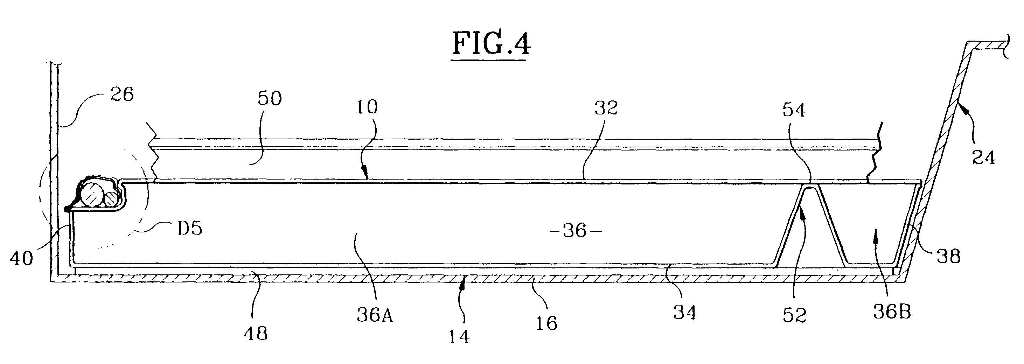

Transversalement, comme on peut le voir à la figure 4, le plancher 14 est délimité par une nervure longitudinale de grandes dimensions formant tunnel 24 et s'étendant selon l'axe médian du véhicule, et par une partie latérale rabattue verticalement 26.

II existe ainsi un espace ou volume libre 36 entre la face supérieure 15 de la tôle de plancher 14 et le plan horizontal P sensiblement parallèle à la partie plane 16 qui correspond au plan d'appui constitué par les faces supérieures 20 des traverses 18 du plancher 14.

C'est dans cet espace 36 qu'est disposé l'élément d'aménagement 10 en forme de faux plancher illustré plus particulièrement à la figure 1.

Dans l'exemple de réalisation schématisé sur les figures, l'élément 10 est un faux plancher creux réalisé par moulage en matière plastique, plus particulièrement selon la technique de moulage par extrusion-soufflage.

L'élément 10 est constitué par exemple pour l'essentiel par deux feuilles parallèles de matière plastique dont l'une 32 constitue globalement la paroi supérieure horizontale du faux plancher 10 et dont l'autre 34 constitue globalement la paroi horizontale inférieure 34 du faux plancher 10, parallèle à la paroi supérieure 32.

Ces deux feuilles formant parois 32 et 34 délimitent verticalement entre elles un espace creux 36 qui, comme on peut le voir notamment à la figure 4, est fermé latéralement par des bords rabattus verticalement 38 et 40 de la paroi inférieure 34 qui sont adjacents aux parties 24 et 26 du plancher 14 et qui s'étendent verticalement jusqu'à une partie correspondante de la paroi supérieure 32 à laquelle elles sont soudées, par exemple par thermosoudage.

L'ensemble constitué par les deux feuilles formant parois 32 et 34 peut, à titre de variante, être constitué par une paraison et réalisé par formage d'un élément tubulaire mou dont les bords, après formage, sont des plis fermés, éventuellement recoupés.

Le caisson 10 est conformé comme la partie de plancher 14 qu'il permet d'aménager c'est-à-dire que dans l'exemple illustré sur les figures, sa partie longitudinale avant 42 est inclinée pour s'adapter à la forme de la partie 22 formant repose-pied.

L'espace 36 est fermé longitudinalement vers l'arrière par une partie rabattue verticalement 44 de la paroi inférieure 34 qui s'étend en regard de la traverse 18 sur une hauteur supérieure à la hauteur moyenne H de la partie centrale principale du caisson 10.

De la même manière, l'espace 36 est fermé longitudinalement vers l'avant par une partie 46 rabattue verticalement vers le bas de la paroi supérieure 32.

L'invention n'est pas limitée au cas où le faux plancher rapporté 10 comporte une partie avant inclinée 42, celle-ci n'étant qu'une variante de réalisation du principe de l'invention qui consiste à prévoir une partie principale sensiblement horizontale du caisson 10 délimitant l'espace 36.

Lorsque le plancher est équipé d'un ou plusieurs caissons 10, la face supérieure 33 de la paroi supérieure 32 constitue le sol du plancher et la face inférieure 35 de la plaque inférieure 34 est prévue pour prendre appui verticalement contre la face supérieure 15 de la tôle de plancher 14, par exemple avec interposition d'une couche 48 de matériau amortisseur des vibrations.

Afin d'améliorer le confort des passagers, et notamment l'insonorisation de l'habitacle, la face supérieure 33 du caisson 10 peut être recouverte par un tapis épais et de masse importante 50 qui est illustré notamment aux figures 2 à 5.

Conformément aux enseignements de l'invention, le faux plancher 10 est conformé pour assurer plusieurs fonctions.

Le volume creux 36 délimité par les parties horizontales et parallèles des parois supérieure 32 et inférieure 34 est tout d'abord partagé par exemple en deux parties 36A et 36B (voir figure 4) qui sont étanches, c'est-à-dire isolées l'une par rapport à l'autre, en étant séparées par une nervure longitudinale 52 réalisée venue de matière avec la paroi inférieure 34 qui s'étend verticalement vers le haut de manière que sa face supérieure 53 soit soudée par contact contre la face inférieure de la paroi supérieure 32.

La partie 36B constitue un conduit étanche d'orientation longitudinale qui permet par exemple la circulation d'un flux d'air de chauffage, d'aération ou de climatisation de l'habitacle du véhicule.

La partie de plus grand volume 36A constitue une caisse ou caisson de résonance d'environ une dizaine de litres, aussi appelé charge, pour un haut-parleur 54 pour la sonorisation du véhicule qui est monté, dans l'exemple illustré sur les figures, dans une ouverture de forme complémentaire 56 formée dans la paroi supérieure 32.

Plus particulièrement, l'ouverture 56 est formée dans une partie arrière 58 de la paroi supérieure 32 qui est inclinée verticalement et qui, par exemple, rejoint le bord supérieur libre de la partie 44 adjacente à la traverse 20 (voir figure 3).

Le haut-parleur 54 peut être protégé par une grille de haut-parleur 60 qui est fixée de manière particulièrement économique grâce à son bord transversal arrière 62 qui est accroché autour des bords jointifs des parties 58 et 44 des parois 32 et 34, et qui est accrochée à la plaque supérieure 32 par des pattes d'accrochage 64 qui s'étendent depuis son bord avant et qui sont reçues dans des fentes complémentaires formées dans la paroi supérieure 32.

Le caisson 10 comporte au moins un volume utile de rangement qui est ici un compartiment de rangement adjacent latéralement au haut-parleur 54, 66 et qui est constitué par une partie en creux 66 formée dans la paroi supérieure 32 (voir figure 2) dont le fond 68 est adjacent à la paroi inférieure 34 et dont la paroi latérale arrière inclinée 70 est adjacente à la partie 44 de la paroi inférieure 34.

L'ouverture supérieure 72, de contour sensiblement rectangulaire donnant accès au compartiment de rangement 66, peut être fermée par un volet ou trappe 74 qui présente ici un profil en arc de cylindre du même type que le profil de la grille 60.

Le volet incurvé 64 est articulé au voisinage de son bord transversal arrière 76 qui comporte des pattes d'articulation 78 qui sont reçues dans des fentes complémentaires 80 formées dans les parties 70 et 44 des parois 32 et 34.

Le bord avant 82 repose par gravité sur la partie en vis-à-vis de l'ouverture 72 et il est aussi prévu des moyens d'accrochage du type des pattes 64 de la grille de haut-parleur 60.

le faux plancher 10 comporte des passages pour des câbles électriques.

Un premier exemple d'un tel type de passages est notamment illustré aux figures 1 à 3, sur lesquelles la partie principale horizontale de la face supérieure 32 comporte une rainure d'orientation transversale 84 qui est formée dans la paroi supérieure 32, qui est conformée avec une section sensiblement circulaire et qui est ouverte verticalement vers le haut pour recevoir des câbles 86 qui y sont introduits verticalement de haut en bas ou selon l'axe de la rainure 84 et qui reposent dans le fond de cette dernière par gravité, la rainure 84 étant de plus fermée par le tapis épais et lourd 50.

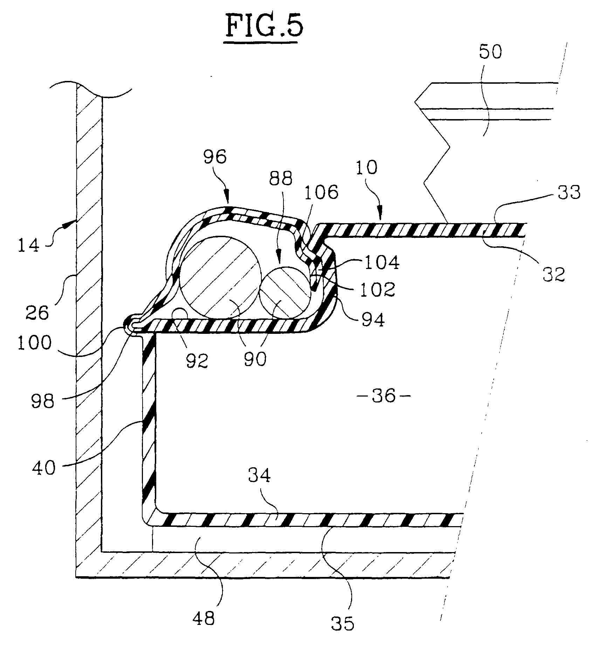

Une autre rainure 88 formant passage pour des câbles 90 est plus particulièrement visible aux figures 1 et 5.

Cette rainure 88 qui est ici partielle, c'est-à-dire qu'elle est essentiellement délimitée par une partie de fond 92 et par une paroi longitudinale latérale 94 appartenant toutes les deux à la paroi supérieure 32, et elle est ouverte verticalement vers le haut et latéralement en direction de la partie 26 de la tôle de plancher 14.

Afin de retenir les câbles 90 dans la rainure 88, il est prévu plusieurs pattes 96 de retenue qui, conformément à une caractéristique de l'invention, sont réalisées venues de matière par moulage avec le faux plancher 10.

A cet effet, chacune des pattes 96 est ici une patte de double épaisseur, c'est-à-dire qu'elle est réalisée venue de matière avec les deux feuilles 32 et 34 auxquelles elles sont reliées par une portion amincie 98, 100 formant charnière et elle se termine par une portion d'extrémité libre 102, 104 coudée qui est emboîtée élastiquement sous une nervure 106 de la paroi latérale 94 qui délimite la rainure 88.

Pour renforcer la partie avant inclinée 42 du faux plancher 10, afin notamment d'éviter son écrasement par les pieds du conducteur, celle-ci comporte des parties formant entretoise 110 qui sont ici des plots sensiblement tronconiques réalisés venus de matière par moulage avec la plaque inférieure 34 et qui s'étend verticalement jusqu'à venir en contact avec la face intérieure de la plaque supérieure 32.

Ainsi, la partie avant renforcée 42 constitue un absorbeur d'énergie par déformation de la matière et elle procure une rigidification de la zone sans se déformer, ou très faiblement, et elle participe à la sécurité du passager en absorbant l'énergie en cas de choc de ses pieds contre cette partie et en évitant ou en minimisant les risques de fractures.

Lorsque le faux plancher est réalisé par assemblage, par collage ou par soudage, de deux éléments en forme générale de plaque moulés par soufflage, est particulièrement économique et elle permet d'utiliser l'espace disponible 26 en assurant de nombreuses fonctions d'aménagement de l'habitacle.

## Revendications

1. Agencement de la partie inférieure de l'habitacle d'un véhicule automobile comportant un plancher (14, 16) qui reçoit un élément (10) formant un faux plancher, l'élément (10) formant faux plancher est délimité par au moins une paroi supérieure (32), **caractérisé en ce que** le faux plancher est délimité en plus par une paroi inférieure (34), en contact avec le plancher (14, 16), qui forme avec ladite paroi supérieure au moins un volume utile et **en ce que** la surface de la paroi inférieure est en contact direct avec la surface du plancher.

2. Agencement selon la revendication 1, **caractérisé en ce que** la paroi inférieure (34) forme au moins une entretoise (52, 110) qui s'étend verticalement jusqu'à venir en contact avec la face intérieure de la plaque supérieure (32).

3. Agencement selon l'une quelconque des revendications précédentes, **caractérisé en ce que** le volume utile est un caisson (36, 36B) associé à un haut parleur (54) qui est monté dans une ouverture (56) de la paroi supérieure (32, 58) du faux plancher (10).

4. Agencement selon la revendication précédente, **caractérisé en ce qu'**il comporte une grille (60) de protection du haut-parleur (54) qui est fixée sur la paroi supérieure (32) du faux plancher (10) par des éléments d'accrochage (62, 64) formés au moins en partie venus de matière avec la paroi supérieure.

5. Agencement selon les revendications 1 ou 2, **caractérisé en ce que** le volume utile est un compartiment (66) de rangement dont l'ouverture d'accès (72) est formée dans la plaque supérieure (32).

6. Agencement selon la revendication précédente, **caractérisé en ce que** le compartiment de rangement (66) est constitué par une partie en creux formée dans la paroi supérieure (32) et qui s'étend à l'intérieur du faux plancher (10).

7. Agencement selon l'une des revendications 5 ou 6, **caractérisé en ce qu'**il comporte un volet (74) de fermeture du compartiment de rangement (66) qui est articulé sur la paroi supérieure (32) du faux plancher (10) par des éléments d'articulation (78, 80) formés au moins en partie venus de matière avec la paroi supérieure (32).

8. Agencement selon la revendication 1, **caractérisé en ce que** le volume utile forme un conduit (36B) pour la circulation d'un fluide, notamment d'air de chauffage d'aération ou de climatisation de l'habitacle.

9. Agencement selon la revendication 1, **caractérisé en ce qu'**une rainure (84, 88) formée en creux dans la paroi supérieure (32) du faux plancher (10) constitue un passage pour des câbles électriques.

10. Agencement selon la revendication précédente, **caractérisé en ce qu'**il comporte des pattes (96) de retenue verticale des câbles électriques (90) dans la rainure (88) qui s'étendent transversalement au-dessus de la face supérieure ouverte de la rainure.

11. Agencement selon la revendication précédente, **caractérisé en ce que** chaque patte de retenue (96) est réalisée venue de matière avec au moins une des parois (32, 34) du faux plancher (10) à laquelle elle est reliée par une partie amincie (98, 100) formant charnière et dont l'extrémité libre (102, 104) coopère avec des moyens d'accrochage (106) réalisés venus de matière avec la paroi supérieure (32) du faux plancher (10).

12. Agencement selon l'une quelconque des revendications précédentes, **caractérisé en ce que** le faux plancher (10) est un élément réalisé en matière plastique, notamment par moulage par extrusion-soufflage à partir de feuilles (32, 34) de matière plastique.

## Claims

1. Arrangement of the lower part of the passenger compartment of a motor vehicle comprising a floor (14, 16) which receives an element (10) forming a false floor, the element (10) forming the false floor is delimited by at least one upper wall (32), **characterised in that** the false floor is also delimited by a lower wall (34) in contact with the floor (14, 16), which forms with said upper wall at least one useful volume, and that the surface of the lower wall is in direct contact with the surface of the floor.

2. Arrangement according to claim 1 **characterised in that** the lower wall (34) forms at least one brace (52, 110) which extends vertically until it comes into contact with the internal face of the upper plate (32).

3. Arrangement according to either one of the preceding claims **characterised in that** the useful volume is a box (36, 36B) associated with a loudspeaker (54) which is mounted in an opening (56) in the upper wall (32, 58) of the false floor (10).

4. Arrangement according to the preceding claim **characterised in that** it comprises a grill (60) for protection of the loudspeaker (54) which is fixed on the upper wall (32) of the false floor (10) by hooking elements (62, 64) formed at least in part integrally with the upper wall.

5. Arrangement according to claim 1 or claim 2 **characterised in that** the useful volume is a storage compartment (66), the access opening (72) of which is formed in the upper plate (32).

6. Arrangement according to the preceding claim **characterised in that** the storage compartment (66) is formed by a recess portion formed in the upper wall (32) and which extends in the interior of the false floor (10).

7. Arrangement according to one of claims 5 and 6 **characterised in that** it comprises a flap (74) for closure of the storage compartment (66) which is pivoted on the upper wall (32) of the false floor (10) by pivot mounting elements (78, 80) formed at least in part integrally with the upper wall (32).

8. Arrangement according to claim 1 **characterised in that** the useful volume forms a conduit (36B) for the flow of a fluid, in particular air for heating, ventilating or air-conditioning of the passenger compartment.

9. Arrangement according to claim 1 **characterised in that** a groove (84, 88) formed in recessed relationship in the upper wall (32) of the false floor (10) constitutes a duct for electrical cables.

10. Arrangement according to the preceding claim **characterised in that** it comprises lugs (96) for vertically retaining the electrical cables (90) in the groove (88), which extend transversely above the upper open face of the groove.

11. Arrangement according to the preceding claim **characterised in that** each retaining lug (96) is formed integrally with at least one of the walls (32, 34) of the false floor (10) to which it is connected by a reduced-thickness portion (98, 100) forming a hinge and the free end (102, 104) of which co-operates with hooking means (106) formed integrally with the upper wall (32) of the false floor (10).

12. Arrangement according to any one of the preceding claims **characterised in that** the false floor (10) is an element made of plastic material, in particular by extrusion blow moulding, from sheets (32, 34) of plastic material.

## Patentansprüche

1. Ausgestaltung des Unterteils des Fahrgastraumes eines Kraftfahrzeuges, mit einem Boden (14, 16), der ein einen Zwischenboden bildendes Bauteil (10) aufnimmt, wobei das den Zwischenboden bildende Bauteil (10) durch wenigstens eine obere Wand (32) begrenzt ist, **dadurch gekennzeichnet, dass** der Zwischenboden ausserdem durch eine untere Zwischenwand (34) begrenzt ist, die mit dem Boden (14, 16) verbunden ist und die mit der oberen Wand mindestens einen nutzbaren Raum bildet und dass die Oberfläche der unteren Wand direkt auf der Oberfläche des Bodens aufliegt.

2. Ausgestaltung nach Anspruch 1, **dadurch gekennzeichnet, dass** in der unteren Wand (34) wenigstens eine Querstrebe (52, 110) ausgebildet ist, die sich in senkrechter Richtung bis zu einer Stelle erstreckt, an der sie die untere Seite der oberen Platte (32) berührt.

3. Ausgestaltung nach einem der vorhergehenden Ansprüche, **dadurch gekennzeichnet, dass** der nutzbare Raum eine Kastenform (36, 36B) aufweist und einem Lautsprecher (54) zugeordnet ist, der in eine Öffnung (56) in der oberen Wand (32, 58) des Zwischenbodens (10) eingesetzt ist.

4. Ausgestaltung nach dem vorhergehenden Anspruch, **dadurch gekennzeichnet, dass** sie ein Gitter (60) zum Schutz des Lautsprechers (54) aufweist, das an der oberen Wand (32) des Zwischenbodens (10) mittels Halteteilen (62, 64) befestigt ist, die zumindest teilweise einstückig mit der oberen Wand hergestellt sind.

5. Ausgestaltung nach Ansprüchen 1 oder 2, **dadurch gekennzeichnet, dass** der nutzbare Raum ein Aufnahmefach (66) ist, dessen Zugangsöffnung (72) in der oberen Platte (32) ausgebildet ist.

6. Ausgestaltung nach dem vorhergehenden Anspruch, **dadurch gekennzeichnet, dass** das Aufnahmefach (66) aus einem hohlen Abschnitt besteht, der in der oberen Wand (32) ausgebildet ist und der sich in das Innere des Zwischenbodens (10) erstreckt.

7. Ausgestaltung nach einem der Ansprüche 5 oder 6, **dadurch gekennzeichnet, dass** sie eine Klappe (74) zum Verschliessen des Aufnahmefachs (66) aufweist, die an der oberen Wand (32) des Zwischenbodens (10) angelenkt ist mittels Gelenkteilen (78,80), die zumindest teilweise einstückug mit der oberen Wand (32) hergestellt sind.

8. Ausgestaltung nach Anspruch 1, **dadurch gekennzeichnet, dass** der nutzbare Raum eine Leitung (36B) bildet für die Zirkulation eines Fluids, insbesondere Luft für die Heizung oder die Kühlung des Fahrgastraumes.

9. Ausgestaltung nach Anspruch 1, **dadurch gekennzeichnet, dass** eine hohle Nut (84, 88) in der oberen Wand (32) des Zwischenbodens (10) ausgebildet ist, die einen Durchlass für elektrische Kabel bildet.

10. Ausgestaltung nach dem vorhergehenden Anspruch, **dadurch gekennzeichnet, dass** sie senkrecht angeordnete Haltelaschen (96) für die elektrischen Kabel (90) in der Nut (88) aufweist, die sich in Querrichtung oberhalb der oberen offenen Seite der Nut erstrecken.

11. Ausgestaltung nach dem vorhergehenden Anspruch,, **dadurch gekennzeichnet, dass** jede Haltelasche einstückig mit wenigstens einer der Wände (32, 34) des Zwischenbodens (10) hergestellt ist, mit der sie über einen dünneren Abschnitt (98, 100) verbunden ist, der ein Scharnier darstellt, und dessen freies Ende (102, 104) mit einer Halteanordnung (106) zusammenwirkt, die einstückig mit der oberen Wand (32) des Zwischenbodens (10) hergestellt ist.

12. Ausgestaltung nach einem der vorhergehenden Ansprüche, **dadurch gekennzeichnet, dass** der Zwischenboden (10) ein Bauteil aus Kunststoff ist, das insbesondere durch ein Extrusionsblasverfahren aus Kunststoffplatten (32, 34) hergestellt ist.
